# EUROPÄISCHE PATENTSCHRIFT

(11) **EP 2 817 768 B1**
(45) Veröffentlichungstag und Bekanntmachung des Hinweises auf die Patenterteilung: **19.12.2018**
(21) Anmeldenummer: 13709312.6
(22) Anmeldetag: 21.02.2013
(51) Int. Cl.: G06K 19/077, B32B 38/06

(54) **ELEKTRONISCHES MODUL UND PORTABLER DATENTRÄGER MIT ELEKTRONISCHEM MODUL UND DEREN HERSTELLUNGSVERFAHREN**
ELECTRONIC MODULE AND PORTABLE DATA CARRIER COMPRISING SAID ELECTRONIC MODULE AND METHOD FOR PRODUCING THE SAME
MODULE ÉLECTRONIQUE ET SUPPORT DE DONNÉES PORTATIF ÉQUIPÉ DUDIT MODULE ÉLECTRONIQUE ET LEUR PROCÉDÉ DE PRODUCTION

(30) Priorität: 21.02.2012 DE 102012003603
(43) Veröffentlichungstag der Anmeldung: 31.12.2014
(73) Patentinhaber: Giesecke+Devrient Mobile Security GmbH, 81677 München (DE)
(72) Erfinder: BALDISCHWEILER, Michael, 81825 München (DE); MAYER, Karlheinz, 88167 Grünenbach (DE); RENNER, Thomas, 80802 München (DE); HUYNH, Thanh-Hao, 83052 Bruckmühl (DE)
(86) Internationale Anmeldenummer: PCT/EP2013/000507
(87) Internationale Veröffentlichungsnummer: WO 2013/124064

(56) Entgegenhaltungen:
- WO-A1-02/071329
- DE-A1-102005 058 101
- US-A1- 2011 020 606

## Beschreibung

Die vorliegende Erfindung betrifft einen portablen Datenträger mit einem in einen Datenträgerkörper des Datenträgers eingebetteten elektronischen Modul, ein entsprechendes Modul sowie jeweils Verfahren zum Herstellen eines solchen Datenträgers und eines solchen Moduls.

Portable, meist kartenförmige Datenträger, insbesondere Chipkarten, werden in vielen Bereichen eingesetzt, beispielsweise als Ausweisdokumente, zum Nachweis einer Zugangsberechtigung zu einem Mobilfunknetz oder zur Durchführung von Transaktionen des bargeldlosen Zahlungsverkehrs. Eine Chipkarte weist einen Kartenkörper und einen in den Kartenkörper eingebetteten integrierten Schaltkreis auf. Um eine effiziente Herstellung der Chipkarte zu ermöglichen, wird der integrierte Schaltkreis bei einer Vielzahl von Herstellungsverfahren zunächst in ein Chipmodul verpackt und anschließend wird das Chipmodul in den Kartenkörper eingebaut. In der Regel wird das Chipmodul in eine Aussparung des Kartenkörpers eingeklebt.

Eine Kommunikation mit dem integrierten Schaltkreis kann über ein Kontaktfeld der Chipkarte abgewickelt werden, das hierzu von einer Kontaktiereinheit berührend kontaktiert wird. Das Kontaktfeld ist in der Regel Bestandteil des Chipmoduls. Alternativ oder zusätzlich zur Kommunikation über das Kontaktfeld kann eine kontaktlose Kommunikation vorgesehen sein. Hierzu kann der Kartenkörper eine Antenne aufweisen, die beim Einbau des Chipmoduls mit dem integrierten Schaltkreis elektrisch leitend verbunden wird. Abhängig vom Einsatzgebiet der Chipkarte kann der Kartenkörper außer der Antenne auch andere oder weitere elektrische Komponenten aufweisen, die beim Einbau des Chipmoduls mit dem integrierten Schaltkreis elektrisch leitend verbunden werden.

Bei der überwiegenden Zahl der für den Einbau eines Chipmoduls in einen Kartenkörper verwendeten Techniken sind die Bereiche, in denen die elektrisch leitenden Verbindungen zwischen dem integrierten Schaltkreis des Chipmoduls und der elektrischen Komponente des Kartenkörpers ausgebildet werden, nicht direkt mittels eines Werkzeugs zugänglich. Es sind daher Kontaktierungsverfahren erforderlich, die trotz dieser fehlenden Zugangsmöglichkeit eine Ausbildung einer elektrisch leitenden Verbindung zwischen dem integrierten Schaltkreis und der elektrischen Komponente ermöglichen.

Die elektrisch leitende Verbindung zwischen dem integrierten Schaltkreis und der elektrischen Komponente kann auf vielfältige Weise hergestellt werden, beispielsweise kraftschlüssig, stoffschlüssig oder mittels eines elektrisch leitfähigen Materials.

Bekannte Verfahren zum Herstellen einer sicheren, stabilen und dauerhaften Kontaktierung zwischen dem Chipmodul und einer elektrischen Komponente des Kartenkörpers umfassen in der Regel eine Vielzahl von verschiedenen Schritten, sei es bei der Herstellung des Moduls, sei es beim Einbetten des Moduls in den Kartenkörper. Dadurch wird die Herstellung des entsprechenden Moduls sowie des Datenträgers mit dem eingebetteten Modul aufwendig und teuer.

Aus der DE 10 2005 058 101 A1 ist ein Verfahren zum Herstellen eine elektronischen Datenträgers bekannt, bei dem ein Chipmodul mit einer Trägerschicht sowie einer elektrisch leitfähigen Schicht versehen ist. Zur Verbindung des Chipmoduls mit dem Kartenkörper wird das sich auf einem Karteninlay befindliche Chipmodul in eine Ausnehmung einer Außenlage des Kartenkörpers eingeführt. Anschließend werden in einem Laminiervorgang Karteninlay und Außenlage miteinander verbunden.

Die WO 02/071329 A1 beschreibt ein Verfahren zur Herstellung eines Moduls zum Einbau in einen Kartenkörper, bei dem ein Modulträger auf einer Seite mit einer leitenden Struktur versehen wird. Bei der Herstellung des Modulträgers wird zumindest für eine an der der leitenden Struktur gegenüberliegenden Seite befindliche erste Schicht des Modulträgers ein Material verwendet, dessen Eigenschaften, die für eine bestimmte Verbindungsart mit einer Materialschicht des Kartenkörpers beim Einbau des Moduls in den Kartenkörper wesentlich sind, auf diese Materialschicht abgestimmt sind.

Zur Ausbildung eines dreidimensionalen Bildes auf einem Datenträger schlägt die US 2011/020606 A1 ein zweistufiges Verfahren vor. In einem ersten Schritt wird ein Halbzeug, enthaltend eine innenliegende deformierbare Schicht und eine darauf angeordnete Overlayschicht, einseitig mit einem strukturierten Laminierblech beaufschlagt, so dass das innenliegende Material verformt wird. Die Overlayschicht fließt anschließend in die entstehenden Lücken der deformierbaren Schicht.

Aufgabe der vorliegenden Erfindung ist es, ein alternatives, einfaches Verfahren zum Herstellen eines elektronischen Moduls sowie eines Datenträgers mit einem solchen Modul vorzuschlagen, wobei das Modul auf einfache Weise und unter Herstellung einer stabilen und dauerhaften elektrisch leitenden Verbindung zwischen dem Modul und einer elektrischen Komponente eines Datenträgerkörpers in den Datenträgerkörper eingebettet werden kann.

Diese Aufgabe wird durch ein Verfahren zum Herstellen eines elektronischen Moduls, ein Verfahren zum Herstellen eines portablen Datenträgers, ein elektronisches Modul sowie einen portablen Datenträger mit den Merkmalen der unabhängigen Ansprüche gelöst. Vorteilhafte Ausgestaltungen und Weiterbildungen sind in den abhängigen Ansprüchen angegeben.

Ein erfindungsgemäßes Verfahren zum Herstellen eines elektronischen Moduls mit einer Kontakteinrichtung derart, dass das Modul zumindest teilweise in einen Datenträgerkörper eines portablen Datenträgers eingebettet werden kann und dabei eine elektrische Komponente des portablen Datenträgers kontaktiert, umfasst folgende Schritte: Es wird eine Trägerschicht sowie zumindest eine elektrisch leitfähige Schicht bereitgestellt. In einem weiteren Schritt, zum Bilden der Kontakteinrichtung des Moduls, wird die zumindest eine elektrisch leitfähige Schicht auf die Trägerschicht aufgebracht. Dies geschieht mittels Laminierens unter Verwendung zumindest eines Laminierblechs oder einer ähnlichen geeigneten Vorrichtung, beispielsweise einer Walze oder dergleichen.

Erfindungsgemäß weist das Laminierblech zumindest eine Vertiefung auf. In diese Vertiefung wird die elektrisch leitfähige Schicht beim Laminieren, welches unter Einwirkung von Druck und Wärme erfolgt, eingepresst. Dadurch bildet sich in der elektrisch leitfähigen Schicht zumindest eine Erhebung derart aus, dass die Kontakteinrichtung und die elektrische Komponente des Datenträgerkörpers beim Einbetten des Moduls in den Datenträgerkörper über die zumindest eine Erhebung kontaktiert werden können.

In der beschriebenen Weise kann ein elektronisches Modul auf einfache und kostengünstige Weise hergestellt werden. Im Vergleich zu bekannten Verfahren, bei denen räumliche Strukturierungen, wie beispielsweise Erhebungen, in der Kontakteinrichtung vorgesehen sind, sind vorliegend keine separaten Verfahrensschritte, wie beispielsweise Ätzen oder Lasern, zum Herstellen einer solchen Strukturierung notwendig.

Weiterhin kann das erfindungsgemäße Modul unter Beibehaltung konventioneller Fertigungstechniken in einen Datenträgerkörper eingebettet werden.

Schließlich bietet das erfindungsgemäße Verfahren die Möglichkeit, anstelle einfacher Erhebungen eine breite Variation räumlich strukturierter Profile in der die Kontakteinrichtung bildenden elektrisch leitfähigen Schicht bereitzustellen.

Die Erhebungen oder allgemein, die Profile, in der elektrisch leitfähigen Schicht des Moduls können, wie nachstehend beschrieben, in geeigneter Weise an die Art, in der das Modul beim Einbetten in den Datenträgerkörper mit einer elektrischen Komponente des Datenträgerkörpers elektrisch leitend verbunden werden soll, angepasst werden. Dabei kann eine direkte Kontaktierung der Kontakteinrichtung des Moduls mit einer elektrischen Komponente des Datenträgerkörpers vorgesehen sein. Alternativ oder zusätzlich kann eine solche elektrische Komponente über ein elektrisch leitfähiges Material, vorzugsweise einen elektrisch leitfähigen Kleber, mit der Kontakteinrichtung des Moduls im Bereich der Erhebung elektrisch leitend verbunden werden.

Ein erfindungsgemäßes Verfahren zum Herstellen eines portablen Datenträgers mit einem Datenträgerkörper und einem elektronischen Modul umfasst neben dem Schritt des Herstellens des elektronischen Moduls in der vorstehend beschriebenen Weise einen Schritt des zumindest teilweisen Einbettens des Moduls in den Datenträgerkörper. Das Einbetten geschieht dabei derart, dass die Kontakteinrichtung des Moduls und eine elektrische Komponente des Datenträgerkörpers über die Erhebung in der elektrisch leitfähigen Schicht direkt oder indirekt - über ein geeignetes elektrisch leitfähiges Material - kontaktiert werden.

Damit zeigen die erfindungsgemäßen Verfahren einen Weg auf, auf einfache und kostengünstige Weise ein elektronisches Modul und einen portablen Datenträger, in den ein solches Modul eingebettet ist, herzustellen.

Als Trägerschicht für das Modul wird in der Regel faserverstärkter Kunststoff, vorzugsweise ein mit einem Harz getränktes Glasfasergewebe, verwendet. Ähnliche Materialien sind unter der Bezeichnung FR4 bekannt und kommen bei der Herstellung von Leiterplatten zum Einsatz.

Der Kunststoff, welcher beispielsweise Epoxidharz sowie gegebenenfalls geeignete Zusatzstoffe enthalten kann, ist dabei vorzugsweise derart ausgebildet, dass er beim Laminieren unter Wärmeeinwirkung die zumindest eine Vertiefung in dem Laminierblech, d.h. den Bereich der Vertiefung, welcher nicht von der darin eingepressten elektrisch leitfähigen Schicht eingenommen wird, ausfüllt.

Nach dem Laminieren, beim Erkalten, verfestigt sich der Kunststoff in der Regel. Auf diese Weise wird die zumindest eine Erhebung in der elektrisch leitfähigen Schicht stabilisiert. Eine Verformung der Erhebung durch externe Krafteinwirkung wird dadurch erschwert.

In weiteren Verfahrensschritten kann ein integrierter Schaltkreis auf der Trägerschicht angeordnet und mit der Kontakteinrichtung in bekannter Weise verbunden werden, beispielsweise mittels Bonddrähten. Bereits beim Aufbringen der zumindest einen elektrisch leitfähigen Schicht auf einer ersten Oberfläche der Trägerschicht kann - im gleichen Verfahrensschritt - auf der gegenüberliegenden Oberfläche der Trägerschicht ebenfalls eine elektrisch leitfähige Schicht angeordnet und aufgebracht werden. Diese kann ebenfalls mit dem integrierten Schaltkreis verbunden werden und als Kontaktfeld für den herzustellenden Datenträger dienen, über welches dieser dann kontaktbehaftet mit einem entsprechenden Lesegerät kommunizieren kann.

Als elektrisch leitfähige Schicht kann eine metallische Schicht, vorzugsweise eine Kupferfolie, bereitgestellt werden. Andere geeignete Materialien, welche sich in der vorstehend beschriebene Weise verformen lassen, sind gleichfalls einsetzbar.

Wie erwähnt, kann die Kontakteinrichtung des Moduls direkt oder indirekt - über ein elektrisch leitfähiges Material - mit der elektrischen Komponente des Datenträgerkörpers verbunden werden.

Im erstgenannten Fall wird die zumindest eine Erhebung in der die Kontakteinrichtung des Moduls bildenden, elektrisch leitfähigen Schicht des Moduls somit derart ausgebildet, dass die Kontakteinrichtung und die elektrische Komponente des Datenträgerkörpers beim Einbetten des Moduls in den Datenträgerkörper dadurch elektrisch leitend verbunden werden, dass die Kontakteinrichtung die elektrische Komponente über die Erhebung direkt kontaktiert.

Wenn die elektrische Komponente des Datenträgerkörpers beispielsweise zumindest teilweise in einer Aussparung des Datenträgerkörpers angeordnet ist, so kann die Erhebung derart ausgebildet sein, dass diese sich, wenn das Modul in den Datenträgerkörper eingebettet ist, derart in die Aussparung erstreckt, dass die Kontakteinrichtung die elektrische Komponente über die Erhebung direkt kontaktiert.

Ist alternativ oder zusätzlich eine elektrisch leitende Verbindung der elektrischen Komponente mit der Kontakteinrichtung des Moduls über ein elektrisch leitfähiges Material, vorzugsweise einen elektrisch leitfähigen Kleber, vorgesehen, so umfasst das Verfahren zur Herstellung des Datenträgers einen weiteren Schritt vor dem Einbetten des Moduls: Das elektrisch leitfähige Material wird in einer Aussparung des Datenträgerkörpers derart angeordnet, dass das Material einerseits mit der elektrischen Komponente des Datenträgerkörpers elektrisch leitend verbunden wird. Das Einbetten des Moduls in den Datenträgerkörper erfolgt dann andererseits derart, dass das Material die Kontakteinrichtung des Moduls im Bereich der Erhebung und die elektrische Komponente des Datenträgerkörpers elektrisch leitend verbindet.

Die Erhebung kann dabei zusätzlich strukturiert ausgebildet sein und in gewisser Weise in die durch das elektrisch leitfähige Material gebildete Schicht eingreifen. Auf diese Weise kann die Verbindung zwischen der Kontakteinrichtung und dem elektrisch leitfähigen Material verbessert werden.

Die Erfindung wird im Folgenden mit Bezug auf die beiliegenden Zeichnungen beispielhaft beschrieben. Darin zeigen:
- Figur 1: eine Draufsicht auf eine bevorzugte Ausführungsform eines erfindungsgemäßen Datenträgers;
- Figur 2: einen Ausschnitt eines Datenträgerkörpers des Datenträgers aus Fig. 1 in Draufsicht ohne eingebettetes elektronisches Modul;
- Figur 3: den Ausschnitt des Datenträgerkörpers aus Fig. 2 in Schnittansicht;
- Figur 4: eine Anordnung bei der Herstellung einer bevorzugten Ausführungsform eines erfindungsgemäßes elektronischen Moduls;
- Figur 5: einen Ausschnitt eines erfindungsgemäßen elektronischen Moduls in Schnittansicht;
- Figur 6A: den Ausschnitt aus Fig. 3 mit eingebettetem Modul aus Fig. 5; und
- Figur 6B: den Ausschnitt aus Fig. 3 mit eingebettetem Modul aus Fig. 6 unter zusätzlicher Verwendung einer Kleberschicht.

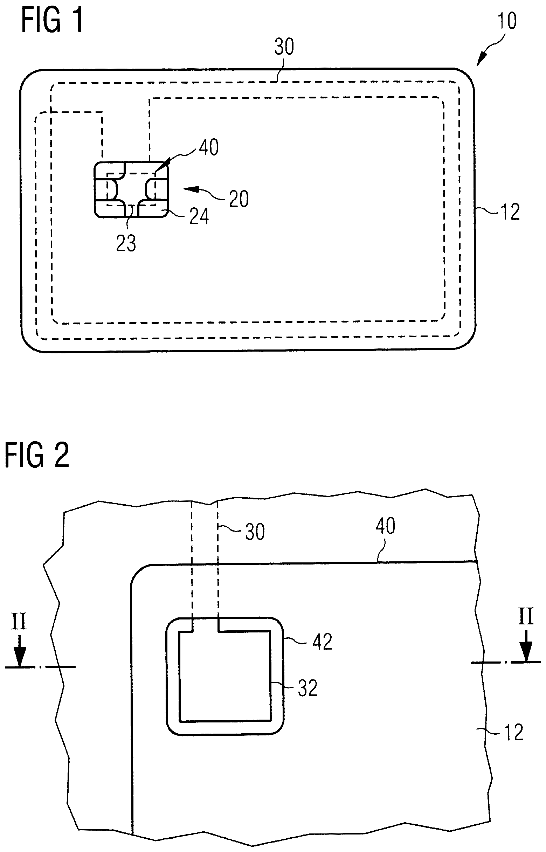

Figur 1 zeigt einen portablen Datenträger 10 in Form einer Chipkarte in einer schematischen Draufsicht. Der Datenträger 10 besitzt einen Datenträgerkörper 12, in den ein elektronisches Modul 20 in Form eines Chipmoduls eingebettet ist. Das Modul 20 umfasst einen integrierten Schaltkreis zum Speichern und/oder Verarbeiten von Daten (nicht gezeigt), welcher in einen Vergusskörper 23 vergossen ist. Weiterhin verfügt das Modul 20 über ein Kontaktfeld 24, das an der Außenseite des Datenträgerkörpers 12 angeordnet ist und den im Inneren des Datenträgerkörpers 12 angeordneten integrierten Schaltkreis überdeckt. Zwischen dem integrierten Schaltkreis und dem Kontaktfeld 24 sind mehrere (nicht gezeigte) elektrisch leitende Verbindungen ausgebildet, so dass dem integrierten Schaltkreis über das Kontaktfeld 24 elektrische Signale zugeführt werden können und der elektrische Schaltkreis über das Kontaktfeld 24 Signale aussenden kann. Hierzu kann das Kontaktfeld 24 mit einem (nicht gezeigten) Lesegerät verbunden werden.

Der Datenträgerkörper 12 weist in seinem Inneren eine elektrische Komponente 30 in Form einer Antennenspule auf. Diese kann beispielsweise als gedruckte oder geätzte Spule oder als Drahtspule ausgebildet sein. Die Antenne 30 ist elektrisch leitend mit dem integrierten Schaltkreis verbunden und ermöglicht analog zum Kontaktfeld eine Übertragung von Signalen, die von dem Schaltkreis empfangen und/oder gesendet werden. Im Falle der Antenne 30 erfolgt eine entsprechende Datenübertragung kontaktlos. Dazu wird der Datenträger 10 in einem geeigneten Abstand zu einem (nicht gezeigten) Lesegerät angeordnet.

Alternativ oder zusätzlich zu der Antenne 30 können in dem Datenträgerkörper 12 des Datenträgers 10 aus Fig. 1 weitere (nicht dargestellte) elektrische Komponenten 30 angeordnet sein, beispielsweise eine Anzeige, ein Schalter, ein Sensor, eine Batterie und dergleichen. Auch diese elektrischen Komponenten können, wie nachfolgend detailliert beschrieben, mit dem integrierten Schaltkreis elektrisch leitend verbunden werden.

Fig. 2 zeigt den Datenträgerkörper 12 aus Fig. 1 vor dem Einsetzen des Moduls 20 ausschnittsweise in einer schematisierten Draufsicht. Der Datenträgerkörper 12 umfasst eine Aussparung 40, in die das Modul 20 zumindest teilweise eingebettet wird. Die Aussparung 40 ist mehrstufig ausgebildet und umfasst eine weitere Aussparung 42. Die Aussparung 42 ist im Vergleich zur Aussparung 40 tiefer ausgebildet. Am Boden der Aussparung 42 tritt eine Komponentenkontakteinrichtung 32 der elektrischen Komponente 30, welche ansonsten in dem Datenträgerkörper 12 unzugänglich eingebettet ist, hervor und ist dort direkt kontaktierbar. Die Komponentenkontakteinrichtung 32 ist einteilig mit der Komponente 30 ausgebildet. Es ist auch möglich, die Komponentenkontakteinrichtung 32 separat auszubilden und elektrisch leitend mit der Komponente 30 zu verbinden. Weiter kann es für bestimmte elektrische Komponenten 30 möglich sein, dass diese direkt, ohne Bereitstellung einer separaten Komponentenkontakteinrichtung 32, elektrisch leitend mit einer entsprechenden Kontakteinrichtung des Moduls 20 verbunden werden können.

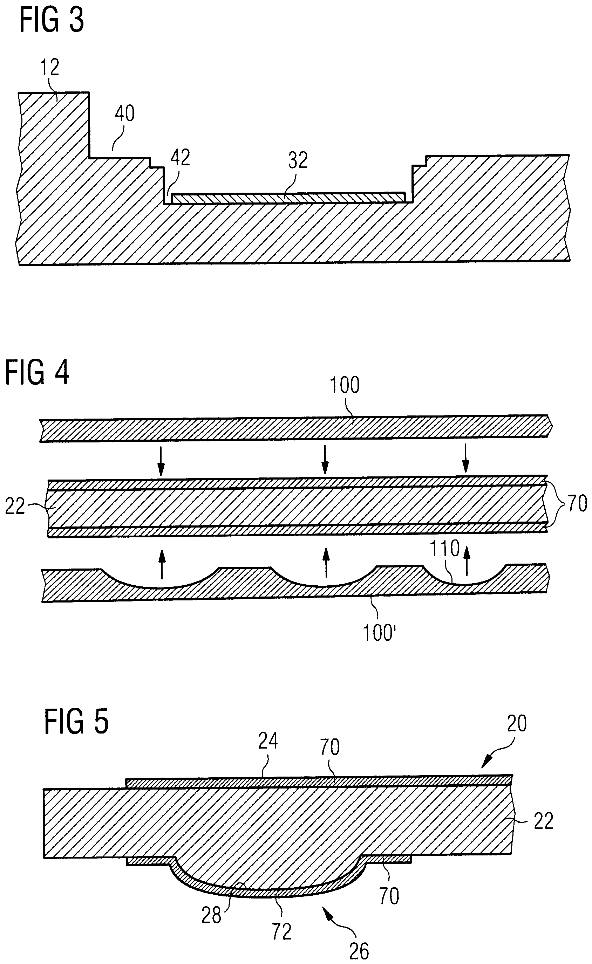

Fig. 3 zeigt den gleichen Ausschnitt des Datenträgerkörpers 12 in einer Schnittansicht entlang der Linie II-II aus Fig. 2.

Der Datenträgerkörper 12 kann mittels verschiedener Verfahren gebildet werden, beispielsweise im Spritzgussverfahren oder durch Laminieren verschiedener Folien. Die Aussparungen 40,42 können dabei in den Folien bereits vorgesehen sein, beispielsweise ausgestanzt, oder aber aus dem Datenträgerkörper herausgefräst werden. Auch ist ein Einbringen einer Aussparung durch eine Materialabtragung mittels Laser möglich.

Fig. 4 zeigt eine Anordnung bei der Herstellung eines elektronischen Moduls 20. Dabei wird auf eine Trägerschicht 22, welche aus einem kunststoffgetränktes Fasergewebe, vorzugsweise einem mit Epoxidharz getränkten Glasfasergewebe, besteht, beidseitig eine elektrisch leitfähige Schicht 70 in Form einer Kupferfolie aufgebracht. Die Kupferfolie kann beispielsweise ca. 35 µm dick sein. Der Kunststoffanteil an der Trägerschicht 22 beträgt vorzugsweise 50 bis 70%. Andere, geeignete Materialien anstelle von Kupfer sind gleichfalls einsetzbar.

Das Aufbringen der elektrisch leitfähigen Schichten 70 auf die Trägerschicht 22 erfolgt mittels Laminierens unter Verwendung von Laminierblechen 100, 100'. Beim Laminieren werden die Schichten 70, 22, 70 unter Druck- und Wärmeeinwirkung (z.B. ca. 20 bar bei ca. 180° C) zwischen den Laminierblechen 100, 100' verpresst und dadurch fest miteinander verbunden, wie dies mit den Pfeilen in Fig. 4 angedeutet ist.

Das Laminierblech 100' weist Vertiefungen 110 auf. Diese können beispielsweise mittels Laserns oder einem geeigneten anderen Verfahren gebildet worden sein. Beim Laminieren wird diejenige elektrisch leitfähige Schicht 70, welche an dieses Laminierblech 100' angrenzt, aufgrund der vorliegenden Druckeinwirkung in die Vertiefung 110 eingepresst. Dadurch ergibt sich, wie in Fig. 5 gezeigt, in der elektrisch leitfähigen Schicht 70 eine Erhebung 72.

Es versteht sich, dass die hier und in der gesamten Beschreibung sowie den Ansprüchen aus Gründen der besseren Lesbarkeit verwendeten, relativen Begriffe "Vertiefung" und "Erhebung" allgemein und nicht beschränkend zu verstehen sind. Anstelle von in dem Laminierblech 100' gebildeten Vertiefungen 110 können auf dem Laminierblech beispielsweise auch Erhebungen (nicht gezeigt) angeordnet werden, zwischen denen sich dann entsprechend Vertiefungen ergeben. Im Zusammenhang mit der vorliegenden Erfindung ist es lediglich wesentlich, dass ein Laminierblech 100' oder dergleichen eine räumliche Struktur 110 aufweist, beispielsweise in Form von Vertiefungen 110, welche sich im Rahmen des Laminierens der Schichten 70 mit der Trägerschicht 22 auf die an das Laminierblech 100' angrenzende Schicht 70, und in nachfolgend beschriebener Weise auch auf die Trägerschicht 22, überträgt. Die "Erhebung 72" in der elektrisch leitfähigen Schicht 70 ist entsprechend allgemein als eine der räumlichen Strukturierung 110 des Laminierblechs 100' entsprechende räumliche Strukturierung 72 zu verstehen.

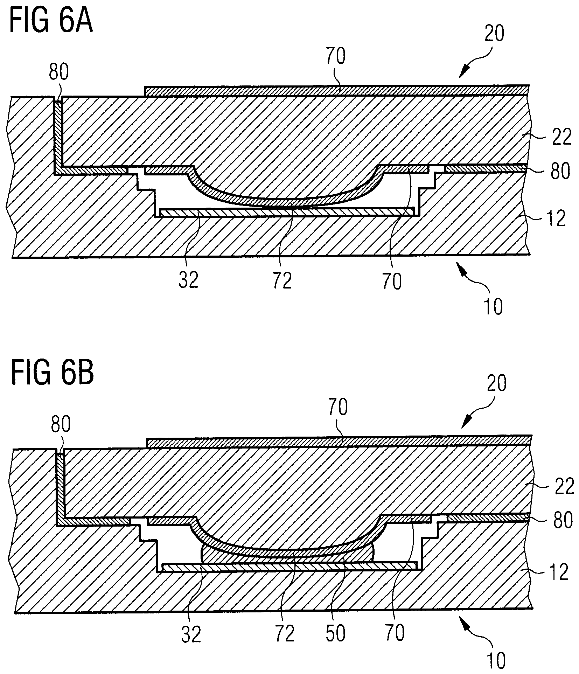

Anzahl und Form der Vertiefungen 110, oder allgemein, die Art der räumlichen Strukturierung in dem Laminierblech 100', kann variiert und der späteren Verwendung des Moduls 20 angepasst werden. Bei Verwendung der wie vorstehend beschrieben dimensionierten Kupferfolie 70 können beispielsweise Vertiefungen 110 bis zu 500 µm vorgesehen sein. Es ist alleine darauf zu achten, dass die Kupferschicht 70 beim Laminieren nicht reißt oder in sonstiger Weise beschädigt wird. Daher sind harte Übergänge und scharfe Kanten in der räumlichen Strukturierung 110 des Laminierblechs 100' zu vermeiden. Für die in den Fig. 6A, 6B gezeigte und nachstehend beschriebene Anwendung sind jedoch je nach Aufbau des Datenträgerkörpers beispielsweise Vertiefungen im Bereich von 80-120 µm, vorzugsweise im Bereich von 85-105 µm ausreichend.

Der Kunststoff in der Trägerschicht 22 fließt während des Laminierens, aufgrund seiner Materialeigenschaften und der Druck- und Wärmeeinwirkung, in den Bereich der Vertiefungen 110, welcher nicht bereits von der elektrisch leitfähigen Schicht 70 eingenommen wird. Nach dem Laminieren, wenn der Kunststoff abkühlt, verfestigt sich dieser und stabilisiert dadurch die Erhebung 72 in der elektrisch leitfähigen Schicht 22, so dass einer Verformung oder gar Zerstörung der Erhebung 72 durch äußere Krafteinwirkung entgegengewirkt werden kann. Dadurch weist nach dem Laminieren auch die Trägerschicht 22 eine räumliche Strukturierung auf, welche der Strukturierung 110 des beim Laminieren verwendeten Laminierblechs 100'im Wesentlichen entspricht.

In Fig. 5 ist ein elektronisches Modul 20, welches wie mit Bezug auf Fig. 4 beschrieben hergestellt worden ist, ausschnittsweise in einer seitlichen Schnittansicht schematisch gezeigt. Die zuletzt beschriebene räumliche Strukturierung der Trägerschicht 22 zeigt sich durch den Anteil 28, welcher den Bereich unter der Erhebung 72 der elektrisch leitfähigen Schicht 70 stabil ausfüllt.

Die Schicht 70 auf der ersten Oberfläche der Trägerschicht 22, welche, wenn das Modul 20 in einen Datenträgerkörper 12 eingebettet ist, an der Oberfläche des Datenträgers 10 angeordnet ist (vgl. Fig. 6A, 6B), bildet das bereits erwähnte Kontaktfeld 24. Die räumlich strukturierte elektrisch leitfähige Schicht 70 auf der gegenüberliegenden Oberfläche bildet eine Kontakteinrichtung 26 des Moduls 20. Über diese Kontakteinrichtung 26 wird das Modul 20, wie nachstehend beschrieben, mit der elektrischen Komponente 30 des Datenträgerkörpers 12 elektrisch leitend verbunden. Im Folgenden wird die Kontakteinrichtung 26 meist als Modulkontakteinrichtung 26 bezeichnet, um diese begrifflich klar von der Komponentenkontakteinrichtung 32 der elektrischen Komponente 30 des Datenträgerkörpers 12 zu unterscheiden.

Das Kontaktfeld 24 und die Modulkontakteinrichtung 26 sind mit dem integrierten Schaltkreis des Moduls 20 elektrisch leitend verbunden, beispielsweise über (nicht gezeigte) Bonddrähte.

In Fig. 6A ist gezeigt, wie das Modul 20 aus Fig. 5 in die Aussparung 40 des Datenträgerkörpers 12 aus Fig. 3 eingebettet und mittels eines geeigneten Klebers 80, beispielsweise eines Heißklebers, darin verklebt worden ist. Die Modulkontakteinrichtung 26 kontaktiert mittels der Erhebung 72 die Komponentenkontakteinrichtung 32 des Datenträgerkörpers 12 direkt, ohne Vermittlung durch ein dazwischen angeordnetes, elektrisch leitfähiges Material. Auf diese Weise kann bei geeigneter Ausgestaltung der Erhebung 72, insbesondere geeigneter Höhe derselben, und mittels geeigneter Druckbeaufschlagung beim Einbetten des Moduls 20 auf besonders einfache und kostengünstige Weise eine stabile elektrisch leitende Verbindung zwischen dem Modul 20 und der elektrischen Komponente 30 hergestellt werden.

Dadurch, dass die Erhebung 72 durch das darunter angeordnete, ausgehärtete Material 28 der Trägerschicht 22 stabilisiert wird, kann es praktisch zu keiner wesentlichen Verformung der Erhebung 72 kommen, welche die Kontaktstabilität zwischen Modul 20 und Komponente 30 beeinträchtigen könnte.

Der in dem Vergusskörper 23 (vgl. Fig. 1) vergossene integrierte Schaltkreis, welcher, wie erwähnt, mit der Modulkontakteinrichtung 26 elektrisch leitend verbunden ist, wird dadurch, über die Komponentenkontakteinrichtung 32 mit der elektrischen Komponente 30, im gezeigten Beispiel der Antenne, elektrisch leitend verbunden.

Auch in Fig. 6B ist gezeigt, wie das Modul 20 aus Fig. 5 in die Aussparung 40 des Datenträgerkörpers 12 aus Fig. 3 eingebettet worden ist. Allerdings ist gemäß dieser Ausführungsform zusätzlich ein elektrisch leitfähiger Kleber 50 vorgesehen, um die Modulkontakteinrichtung 26 im Bereich der Erhebung 72 und die Komponentenkontakteinrichtung 32 dauerhaft und stabil elektrisch leitend zu verbinden. Anstelle des Klebers 50 kann auch ein elastisches, elektrisch leitfähiges Material vorgesehen sein.

Ferner ist es denkbar, zur Herstellung einer Verbindung im Übergang zwischen Modulkontakteinrichtung 26 und Komponentenkontakteinrichtung 32 eine Mehrschichtkontaktfolie, bestehend beispielsweise aus Aluminium und Nickel einzusetzen. Bei dieser Mehrschichtkontaktfolie handelt es sich um eine aus mehreren weniger als einen Mikrometer dicken aneinander angrenzenden Schichten aus miteinander exotherm reagierenden Materialien hergestellte Kontaktfolie. Besonders bevorzugt sind die Schichten weniger als 500 nm oder < 200 nm oder < 100 nm oder < 50 nm oder sogar < 30 nm dick. Derartige Kontaktfolien sind von der in Clinton, New York, USA ansässigen Firma "Indium Corporation" unter der Bezeichnung "Nanofoil®" erhältlich.

Die Kontaktfolien werden durch Einbringen von Energie gezündet, wodurch die Materialien der aneinandergrenzenden Schichten beginnen, exotherm miteinander zu reagieren. Dadurch erhitzt sich die Kontaktfolie und stellt die Verbindung zwischen Modulkontakteinrichtung 26 und Komponentenkontakteinrichtung 32 durch Verschweißen her. Das Einbringen der Energie in die Mehrschichtkontaktfolie kann vorzugsweise durch elektromagnetische Strahlung, wie z.B. Mikrowellen oder auch durch elektrische Energie erfolgen. Im letzteren Fall eignen sich die elektrischen Anschlüsse des Chipmoduls für das Beaufschlagen mit einem Strom in geeigneter Höhe.

Um eine besonders dauerhafte Kontaktierung zwischen der Modulkontakteinrichtung 26 und dem elektrisch leitfähigen Material 50 herstellen zu können, kann die Modulkontakteinrichtung 26 im entsprechenden Bereich, d.h. im Bereich der Erhebung 72, weitere räumliche Strukturierungen (nicht gezeigt) aufweisen. Das elektrisch leitfähige Material 50 und die Modulkontakteinrichtung 26 können dadurch gegenseitig ineinander eingreifen.

Die räumlichen Strukturierungen können beispielsweise ausgehend von der Mitte des Bereichs der Erhebung 72 strahlenförmig nach außen verlaufen und dafür sorgen, dass überschüssiges Material des Klebers 50 oder des elektrisch leitfähigen Materials nach außen abgeleitet werden kann, so dass die Verbindung mit der Komponentenkontakteinrichtung 32 verbessert wird. Zu diesem Zweck ist es auch denkbar, die räumliche Strukturierung des Bereichs der Erhebung 72 als konzentrische Kreise, spiralförmig, wellenförmig oder in beliebigen Kombinationen der vorgenannten Ausgestaltungen zu wählen.

## Patentansprüche

1. Verfahren zum Herstellen eines elektronischen Moduls (20) mit einer Kontakteinrichtung (26) derart, dass das Modul (20) zumindest teilweise in einen Datenträgerkörper (12) eines portablen Datenträgers (10) eingebettet werden kann und dabei eine elektrische Komponente (30, 32) des portablen Datenträgers kontaktiert, umfassend den Schritt:
- Bereitstellen einer Trägerschicht (22) sowie zumindest einer elektrisch leitfähigen Schicht (70);
**gekennzeichnet durch** die Schritte:
- Bilden der Kontakteinrichtung (26) durch Aufbringen der zumindest einen elektrisch leitfähigen Schicht (70) auf die Trägerschicht (22) durch Laminieren unter Verwendung eines Laminierblechs (100; 100'),
- Anordnen eines integrierten Schaltkreises auf der Trägerschicht (22);
- Verbinden des integrierten Schaltkreises mit der Kontakteinrichtung (26), weiter **dadurch gekennzeichnet, dass** das Laminierblech (100') zumindest eine Vertiefung (110) aufweist, in welche die elektrisch leitfähige Schicht (70) beim Laminieren eingepresst wird, wodurch sich zumindest eine Erhebung (72) in der elektrisch leitfähigen Schicht (70) derart ausbildet, dass die Kontakteinrichtung (26) und die elektrische Komponente (30,32) des Datenträgerkörpers (12) beim Einbetten des Moduls (20) in den Datenträgerkörper (12) über die zumindest eine Erhebung (72) kontaktiert werden können.

2. Verfahren nach Anspruch 1, **dadurch gekennzeichnet, dass** als Trägerschicht (22) faserverstärkter Kunststoff, vorzugsweise mit einem Harz getränktes Glasfasergewebe, verwendet wird.

3. Verfahren nach Anspruch 2, **dadurch gekennzeichnet, dass** der Kunststoff beim Laminieren die zumindest eine Vertiefung (110) in dem Laminierblech (100') ausfüllt.

4. Verfahren nach Anspruch 3, **dadurch gekennzeichnet, dass** sich der Kunststoff nach dem Laminieren verfestigt und dadurch die Erhebung (72) in der elektrisch leitfähigen Schicht (22) stabilisiert.

5. Verfahren nach einem der Ansprüche 1 bis 4, **dadurch gekennzeichnet, dass** als elektrisch leitfähige Schicht (70) eine metallische Schicht, vorzugsweise eine Kupferfolie, bereitgestellt wird.

6. Verfahren zur Herstellung eines portablen Datenträgers (10) mit einem Datenträgerkörper (12) sowie einem elektronischen Modul (20), umfassend die Schritte:
- Herstellen des elektronischen Moduls (20) mit einem Verfahren nach einem der Ansprüche 1 bis 5;
- zumindest teilweises Einbetten des Moduls (20) in den Datenträgerkörper (12) derart, dass die Kontakteinrichtung (26) des Moduls (20) und eine elektrische Komponente (30, 32) des Datenträgerkörpers (12) über die Erhebung (72) in der elektrisch leitfähigen Schicht (70) kontaktiert werden.

7. Verfahren nach Anspruch 6, **gekennzeichnet durch** den weiteren Schritt vor dem Einbetten des Moduls (20):
- Anordnen eines elektrisch leitfähigen Materials (50), vorzugsweise eines elektrisch leitfähigen Klebers (50), in einer Aussparung (42) des Datenträgerkörpers (12) derart, dass das Material (50) mit der elektrischen Komponente (30, 32) des Datenträgerkörpers (12) elektrisch leitend verbunden wird;
wobei das Modul (20) dann derart in den Datenträgerkörper (12) eingebettet wird, dass das Material (50) die Kontakteinrichtung (26) des Moduls (20) im Bereich der Erhebung (72) und die elektrische Komponente (30, 32) des Datenträgerkörpers (12) elektrisch leitend verbindet.

## Claims

1. A method for manufacturing an electronic module (20) having a contact device (26) such that the module (20) can be embedded at least partly in a data carrier body (12) of a portable data carrier (10) and in doing so contacts an electric component (30, 32) of the portable data carrier, comprising the step of:
- providing a carrier layer (22) as well as at least one electrically conductive layer (70);
**characterized by** the steps of:
- forming the contact device (26) by applying the at least one electrically conductive layer (70) onto the carrier layer (22) by laminating using a lamination plate (100, 100'),
- arranging an integrated circuit on the carrier layer (22);
- connecting the integrated circuit with the contact device (26),
further **characterized in that** the lamination plate (100') has at least one depression (110), into which the electrically conductive layer (70) is pressed upon lamination, thereby at least one elevation (72) in the electrically conductive layer (70) being forming such that upon embedding the module (20) in the data carrier body (12) the contact device (26) and the electrical component (30, 32) of the data carrier body (12) can be contacted via the at least one elevation (72).

2. The method according to claim 1, **characterized in that** as a carrier layer (22) a fiber-reinforced plastic, preferably a glass fiber fabric impregnated with a resin is used.

3. The method according to claim 2, **characterized in that** upon lamination the plastic fills the at least one depression (110) in the lamination plate (100').

4. The method according to claim 3, **characterized in that** the plastic solidifies after the lamination and thereby stabilizes the elevation (72) in the electrically conductive layer (22).

5. The method according to any of claims 1 to 4, **characterized in that** as an electrically conductive layer (70) a metallic layer, preferably a copper foil is provided.

6. A method for manufacturing a portable data carrier (10) having a data carrier body (12) as well as an electronic module (20), comprising the steps of:
- manufacturing the electronic module (20) with a method according to any of claims 1 to 5;
- at least partially embedding the module (20) in the data carrier body (12) such that the contact device (26) of the module (20) and an electrical component (30, 32) of the data carrier body (12) are contacted via the elevation (72) in the electrically conductive layer (70).

7. The method according to claim 6, **characterized by** the further step, before the embedding of the module (20), of:
- arranging an electrically conductive material (50), preferably an electrically conductive adhesive (50), in a recess (42) of the data carrier body (12) such that the material (50) is electroconductively connected with the electric component (30, 32) of the data carrier body (12);
wherein the module (20) is then embedded in the data carrier body (12) such that the material (50) electroconductively connects the contact device (26) of the module (20) in the region of the elevation (72) and the electric component (30, 32) of the data carrier body (12).

## Revendications

1. Procédé de fabrication d'une module électronique (20) ayant un dispositif de contact (26), de telle façon que le module (20) peut être encastré au moins partiellement dans un corps de support de données (12) d'un support de données portable (10) et entre alors en contact avec un composant électrique (30, 32) du support de données portable, comprenant l'étape :
- mise à disposition d'une couche support (22) ainsi que d'au moins une couche électroconductrice (70) ;
**caractérisé par** les étapes :
- constitution du dispositif de contact (26) par application de la au moins une couche électroconductrice (70) sur la couche support (22) par laminage en utilisant une tôle de laminage (100; 100'),
- agencement d'un circuit intégré sur la couche support (22) ;
- liaison du circuit intégré au dispositif de contact (26),
en outre
**caractérisé en ce que** la tôle de laminage (100') comporte au moins un renfoncement (110) dans lequel la couche électroconductrice (70) est pressée lors du laminage, ce par quoi au moins une protubérance (72) est engendrée de telle façon dans la couche électroconductrice (70) que le dispositif de contact (26) et le composant électrique (30, 32) du corps de support de données (12) peuvent, lors de l'encastrement du module (20) dans le corps de support de données (12), être mis en contact par l'intermédiaire de la au moins une protubérance (72).

2. Procédé selon la revendication 1, **caractérisé en ce que**, en tant que couche support (22), de la matière plastique renforcée par des fibres, de préférence par un tissu en fibres de verre imprégné de résine, est utilisée.

3. Procédé selon la revendication 2, **caractérisé en ce que** la matière plastique, lors du laminage, remplit le au moins un renfoncement (110) dans la tôle de laminage (100').

4. Procédé selon la revendication 3, **caractérisé en ce que** la matière plastique se solidifie après le laminage et, par cela, stabilise la protubérance (72) dans la couche électroconductrice (22).

5. Procédé selon une des revendications de 1 à 4, **caractérisé en ce que**, en tant que couche électroconductrice (70), une couche métallique, de préférence une feuille de cuivre, est mise à disposition.

6. Procédé de fabrication d'un support de données portable (10) ayant un corps de support de données (12) ainsi qu'un module électronique (20), comprenant les étapes :
- fabrication du module électronique (20) par un procédé selon une des revendications de 1 à 5
- encastrement au moins partiel du module (20) dans le corps de support de données (12), de telle façon que le dispositif de contact (26) du module (20) et un composant électrique (30, 32) du corps de support de données (12) sont, par l'intermédiaire de la protubérance (72) dans la couche électroconductrice (70), mis en contact.

7. Procédé selon la revendication 6, **caractérisé par** l'autre étape avant l'encastrement du module (20) :
- agencement d'un matériau électroconducteur (50), de préférence d'une colle électroconductrice (50), dans un évidement (42) du corps de support de données (12), de telle façon que le matériau (50) est relié de manière électriquement conductrice avec le composant électrique (30, 32) du corps de support de données (12) ;
cependant que le module (20) est alors encastré de telle façon dans le corps de support de données (12) que le matériau (50) relie de manière électriquement conductrice le dispositif de contact (26) du module (20) dans la zone de la protubérance (72) et le composant électrique (30, 32) du corps de support de données (12).
